# EUROPEAN PATENT SPECIFICATION

(11) **EP 3 777 527 B1**
(45) Date of publication and mention of the grant of the patent: **21.06.2023**
(21) Application number: 18911819.3
(22) Date of filing: 22.10.2018
(51) Int. Cl.: A01K 7/00

(54) **PORTABLE WATER FEEDER FOR PETS**
TRAGBARE WASSERVERSORGUNGSVORRICHTUNG FÜR HAUSTIERE
DISPOSITIF D'ALIMENTATION EN EAU PORTATIF POUR ANIMAUX DOMESTIQUES

(30) Priority: 26.03.2018 CN 201820419098 U
(43) Date of publication of application: 17.02.2021
(73) Proprietor: Jiangsu Els Plastic Industry Co., Ltd., Yangzhou, Jiangsu 225200 (CN)
(72) Inventor: GONG, Yuan, Yangzhou, Jiangsu 225200 (CN); ZHAO, Kang, Yangzhou, Jiangsu 225200 (CN)
(74) Representative: Sach, Greg Robert
(86) International application number: PCT/CN2018/111141
(87) International publication number: WO 2019/184313

(56) References cited:
- CN-A- 107 821 205
- CN-U- 204 410 557
- CN-U- 206 728 866
- US-A- 5 960 742
- US-A1- 2008 115 732

## Description

### TECHNICAL FIELD

The present disclosure relates to the field of pet drinking machinery, and in particular to a portable pet water feeder.

### BACKGROUND

At present, more and more people love to keep pets, and the diet and daily life of pets are also concerned by pet lovers.

When pets go out with their owners, people mostly use mineral water to feed their pets. In the process of unscrewing the cap and feeding water to the pets, it is easy for water to spill out, wasting water resources. Further, by doing so, it is easy to choke the pets. In addition, there are some portable pet water feeders on the market that provide water by pressing, but their internal mechanisms such as springs are immersed in water, which are prone to corrosion and affect their service life.

CN201720432012U discloses a pet drinking cup, including a cup and a bowl cover, the inside cavity of the cup forms water storage space, the cup defines an opening communicating with the water storage space. The bowl cover is connected in the opening part of cup, is provided with an out water cavity and a feeding tank. The out water cavity and the feeding tank are communicated through the water outlet. The out water cavity and the water storage space are communicated. An out water mechanism is provided in the out water cavity. The out water mechanism is connected with an outside button on the bowl cover and can open or close the water outlet.

### SUMMARY

The technical problem to be solved by the present disclosure is to provide a portable pet water feeder, which comes with a slide cover for providing water by pressing and is convenient and practical, safe and sanitary, and long in service life.

In order to solve the above technical problems, the present disclosure provides a portable pet water feeder, comprising a cup body and a slide cover, wherein the slide cover is sleeved on the outer wall of the cup body and is slidable along the outer wall of the cup body to be used as a bowl for a drinking pet, the cup body is provided with an upper cover, the upper cover is provided with a water outlet nozzle, a partition plate is provided between the upper cover and the cup body, the partition plate is provided with a water outlet hole, a press-type water flow switch component is provided in the upper cover, and the water flow switch component connects the water outlet hole and the water outlet nozzle.

Preferably, the press-type water flow switch component comprises a water guiding pipe, an insert block, a first spring and a button, one end of the water guiding pipe is connected to the water outlet nozzle, the other end thereof is connected to the water outlet hole, the pipe wall of the water guiding pipe is provided with a groove body, one end of the insert block is inserted into the water guiding pipe from the groove body, the other end of the insert block extends out of the pipe wall of the water guiding pipe and is connected with the button, and the first spring is provided between the button and the water guiding pipe.

Preferably, the end of the insert block is L-shaped, and the end of the insert block is provided in parallel with the pipe wall of the water guiding pipe.

Preferably, the partition plate is provided with an air inlet hole, the upper cover is further provided with a water locking component, the water locking component comprises a slider, a hole blocking member and a second spring, the slider is provided with the hole blocking member, the hole blocking member is provided toward the air inlet hole, and the outer wall of the hole blocking member is sleeved with the second spring.

Preferably, the top of the slider is provided with a first groove and a second groove with different depths, a water locking switch is provided on the upper cover, the water locking switch is provided with a protruding end, and the protruding end is provided perpendicular to the slider and buckled in the first groove or the second groove.

Preferably, a filter tray is provided in the cup body, and a filter purification component is placed in the filter tray.

Preferably, the filter purification component comprises a charcoal bag.

Preferably, the slide cover is provided with a drinking cavity, and the water outlet nozzle is communicated with the drinking cavity.

Compared with the prior art, the beneficial effects of the present disclosure are as follows.
1. The present disclosure is provided with a pulling-type slide cover, which serves as a "small bowl" for pets to drink water, which saves space and is convenient and practical.
2. The press-type water flow switch component of the present disclosure is not immersed in water, and is provided independently of the waterway, which is long in service life, safe and sanitary.
3. The pet water feeder in the present disclosure is convenient to carry outdoors and is simple and convenient to use.

### BRIEF DESCRIPTION OF THE DRAWINGS

In order to more clearly describe the technical solutions in the embodiment technology of the present disclosure, the drawings needed in the technical description of the embodiments will be briefly introduced hereinafter. Obviously, the drawings in the following description are only some embodiments of the present disclosure. For those skilled in the art, other drawings can be obtained based on these drawings without creative work.
FIG. 1 is a schematic diagram of the structure according to the present disclosure;
FIG. 2 is a schematic cross-sectional diagram of the present disclosure;
FIG. 3 is an enlarged schematic diagram of FIG. 2 in area A;
FIG. 4 is a schematic diagram of the structure of a water locking component according to the present disclosure.

In the figures, 10-cup body, 20-slide cover, 30-upper cover, 40-water outlet nozzle, 41-button, 42-connector, 43-first spring, 44-fixed block, 45-insert block, 46-water guiding pipe, 50-partition plate, 51-air inlet hole, 60-water locking switch, 61-protruding end, 62-slider, 63-second spring, 64-hole blocking member, 65-first groove, 66-second groove, 70-filter tray, 71-charcoal bag.

### DESCRIPTION OF THE EMBODIMENTS

The technical solutions in the embodiments of the present disclosure will be clearly and completely described with reference to the drawings in the embodiments of the present disclosure. Obviously, the described embodiments are only some embodiments of the present disclosure, rather than all the embodiments. Based on the embodiments of the present disclosure, all other embodiments obtained by those skilled in the art without creative work shall fall within the protection scope of the present disclosure.

### Embodiment

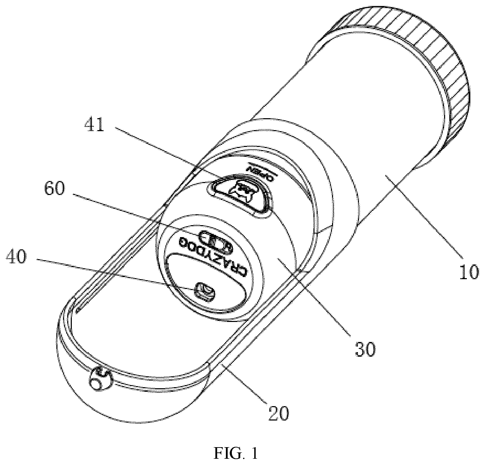

Referring to FIGS. 1 to 4, the present disclosure discloses a portable pet water feeder, comprising a cup body 10 and a slide cover 20, wherein the slide cover 20 is sleeved on the outer wall of the cup body 10 and is slidable along the outer wall of the cup body 10, the cup body 10 is provided with an upper cover 30, the upper cover 30 is provided with a water outlet nozzle 40, a partition plate 50 is provided between the upper cover 30 and the cup body 10, the partition plate 50 is provided with an air inlet hole 51 and a water outlet hole, a press-type water flow switch component is provided in the upper cover 30, and the press-type water flow switchcomponent connects the water outlet hole 52 and the water outlet nozzle 40.

FIG. 1 shows a schematic diagram of the structure according to the present disclosure. The slide cover 20 is sleeved on the outer wall of the cup body 10, and the slide cover 20 is pulled open, which can be used as a "small bowl" for pets. The slide cover 20 is provided with a drinking cavity, and the water outlet nozzle 40 is communicated with the slide cover 20, so that drinking water can flow into the slide cover 20 more easily. The upper cover 30 is provided with a button 41 and a water locking switch 60. The water locking switch 60 can move left and right. The water locking switch 60 is turned on and the button 41 is press, so that water will flow from the water outlet nozzle 40 into the slide cover 20, which is convenient for pets to drink water. When the pet has finished drinking water, the slide cover 20 is put away, which can be easily carried. The advantage of this slide cover is that it is convenient to store, and there is no need to prepare additional utensils for containing water.

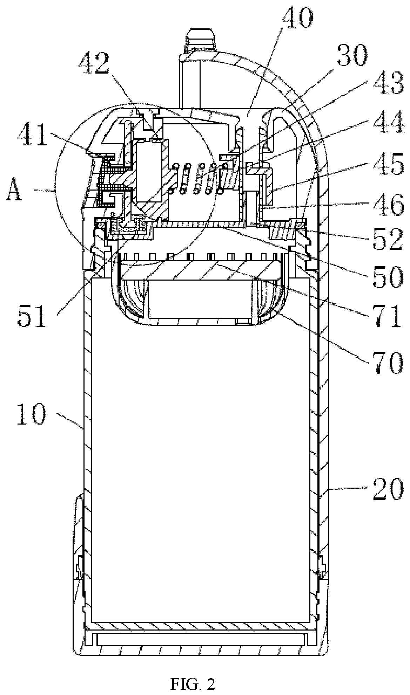

FIG. 2 shows a schematic cross-sectional diagram of the present disclosure. A partition plate 50 is provided between the upper cover 30 and the cup body 10, and the partition plate 50 is provided with an air inlet hole 51 and a water outlet hole 52. When the air inlet hole 51 is blocked, no water can flow from the water outlet hole 52. A press-type water flow switch component is provided in the upper cover 30, and the press-type water flow switch component comprises a water guiding pipe 46, an insert block 45, a first spring 43 and a button 41. One end of the water guiding pipe 46 is connected with the water outlet nozzle 40, and the other end thereof is connected with the water outlet hole 52. The water guiding pipe 46 is provided with a groove body, and the insert block 45 is vertically inserted into the water guiding pipe 46 from the groove body. The end of the insert block 45 inserted into the water guiding pipe 46 is L-shaped, and the end of the insert block is provided in parallel with the pipe wall of the water guiding pipe 46. The other end of the insert block 45 is connected to the button 41 through a connector 42. When the button 41 is pressed, the connector 42 and the insert block 45 move to the left, the water guiding pipe 46 is conducted, and water can flow out from the water guiding pipe 46. A fixing block 44 is provided on the left side of the water guiding pipe 46, and a first spring 43 is provided between the connector 42 and the fixing block 44. When the button 41 is released, the connector 42 will move to the left under the action of the first spring 43 and drive the insert block 45 to move to the left. The water guiding pipe 46 is blocked and water cannot flow out. This press-type water flow switch component can pour different amounts of water as needed, and thus can more accurately control the outflow of water flow. A filter tray 70 is provided in the cup body 10, and a filter purification component is placed in the filter tray 70. In this embodiment, the filter purification component comprises a charcoal bag 71. The function of the filter purification component is to filter the drinking water to ensure that the pets drink healthy water.

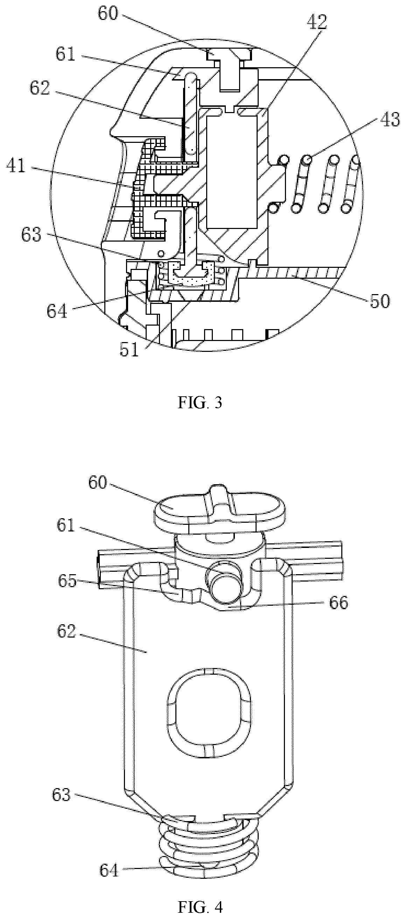

FIG. 3 shows an enlarged diagram of FIG. 2 in area A. A water locking component is further provided in the upper cover 30, and the function of the water locking component is to control whether the water flows out. The water locking component comprises a slider 62, a hole blocking member 64 and a second spring 63. The slider 62 is provided vertically. The hole blocking member 64 is provided on the lower side of the slider 62 and can move downward along with the slider 62 to block the air inlet hole 51. A second spring 63 is sleeved on the outer wall of the hole blocking member 64.

FIG. 4 is a schematic diagram of the structure of a water locking component. The top of the slider 62 is provided with a first groove 65 and a second groove 66 with different depths, and the second groove 66 is deeper than the first groove 65. A water locking switch 60 is provided on the upper cover 30. The water locking switch 60 is provided on the upper cover 30, and the water locking switch 60 can slide horizontally. The water locking switch is provided with a protruding end 61, the protruding end 61 is provided perpendicular to the slider 62, and the protruding end 61 is buckled in the first groove 65 or the second groove 66. The water locking switch 60 moves to the left, the protruding end 61 is buckled on the first groove 65, the slider 62 moves downward, the hole blocking member 64 moves downward to block the air inlet hole 51, and the pet water feeder cannot discharge water. The water locking switch 60 moves to the right, the protruding end 61 is buckled in the second groove 66, the slider 62 moves upward under the action of the second spring 63, and the hole blocking member 64 also moves upward with the slider 62. Air can enter through air inlet hole 51. The water feeder transforms to the state of FIG. 1, the button 41 is pressed, and the pet water feeder will discharge water. The function of the water lock component is to prevent water leakage by accidentally pressing the button 41. Due to the small caliber of the water outlet hole 52, as long as the water locking switch 60 is turned off, no matter whether the button 41 is pressed or not, the water outlet nozzle 40 will not discharge water.

In this embodiment, since the press-type water flow switch component and the water locking component are provided on the upper side of the partition plate 50, the water locking component and the mechanism within the spring of the water flow switch component are not immersed in the water, and are provided independently of the waterway, which can extend the service life and is more healthy and sanitary.

The above description of the disclosed embodiments enables those skilled in the art to realize or use the present disclosure. Various modifications to these embodiments will be obvious to those skilled in the art. The general principles defined herein can be implemented in other embodiments without departing from the spirit or scope of the present disclosure. Therefore, the present disclosure will not be limited to the embodiments shown herein, but should conform to the widest scope consistent with the principles and novel points disclosed herein.

## Claims

1. A portable pet water feeder, comprising a cup body (10), the portable pet water feeder is characterized that, the portable pet water feeder further comprises a slide cover (20), wherein the slide cover (20) is sleeved on the outer wall of the cup body (10) and is slidable along the outer wall of the cup body (10) to be used as a bowl for a drinking pet, the cup body (10) is provided with an upper cover (30), the upper cover (30) is provided with a water outlet nozzle (40), a partition plate (50) is provided between the upper cover (30) and the cup body (10), the partition plate (50) is provided with a water outlet hole (52), a waterflow control component is provided in the upper cover (30), wherein said waterflow control component is a press-type water flow switch component connecting the water outlet hole (52) and the water outlet nozzle (40).

2. The portable pet water feeder according to claim 1, wherein the press-type water flow switch component comprises a water guiding pipe (46), an insert block (45), a first spring (43) and a button (41), one end of the water guiding pipe (46) is connected to the water outlet nozzle (40), the other end thereof is connected to the water outlet hole (52), the pipe wall of the water guiding pipe (46) is provided with a groove body, one end of the insert block (45) is inserted into the water guiding pipe (46) from the groove body, the other end of the insert block (45) extends out of the pipe wall of the water guiding pipe (46) and is connected with the button (41), and the first spring (43) is provided between the button (41) and the water guiding pipe (46).

3. The portable pet water feeder according to claim 2, wherein the end of the insert block (45) is L-shaped, and the end of the insert block (45) is provided in parallel with the pipe wall of the water guiding pipe (46).

4. The portable pet water feeder according to claim 1, wherein the partition plate (50) is provided with an air inlet hole (51), the upper cover (30) is further provided with a water locking component, the water locking component comprises a slider (62), a hole blocking member (64) and a second spring (63), the slider (62) is provided with the hole blocking member (64), the hole blocking member (64) is provided toward the air inlet hole (51), and the outer wall of the hole blocking member (64) is sleeved with the second spring (63).

5. The portable pet water feeder according to claim 4, wherein the top of the slider (62) is provided with a first groove (65) and a second groove (66) with different depths, a water locking switch (60) is provided on the upper cover (30), the water locking switch (60) is provided with a protruding end (61), and the protruding end (61) is provided perpendicular to the slider (62) and buckled in the first groove (65) or the second groove (66).

6. The portable pet water feeder according to claim 1, wherein a filter tray (70) is provided in the cup body (10), and a filter purification component is placed in the filter tray.

7. The portable pet water feeder according to claim 6, wherein the filter purification component comprises a charcoal bag (71).

8. The portable pet water feeder according to claim 4, wherein the slide cover (20) is provided with a drinking cavity, and the water outlet nozzle (40) is communicated with the drinking cavity.

## Patentansprüche

1. Tragbarer Haustier-Wasserspender, welcher einen Becherkörper (10) umfasst und **dadurch gekennzeichnet ist, dass** an einer Außenseitenwand des Becherkörper (10) eine Klappe (20) angebracht ist, welche entlang dieser Außenseitenwand auf- und zuschoben werden kann, wobei der Becherkörper (10) mit einer oberen Abdeckung (30) versehen ist, welche mit einer Wasserablasstülle (40) ausgebildet ist, wobei zwischen der oberen Abdeckung (30) und dem Becherkörper (10) eine Trennwand (50) mit einem Wasserauslassloch (52) ausgebildet, wobei in der oberen Abdeckung (30) ein Wasserflusssteuerelement eingesetzt ist, welches als eine druckbedingte Wasserschaltereinheit mit dem Wasserauslassloch (52) und der Wasserablasstülle (40) durchgehend verbunden ist.

2. Tragbarer Haustier-Wasserspender nach Anspruch 1, **dadurch gekennzeichnet, dass** die druckbedingte Wasserschaltereinheit einen Wasserkanal (46), einen Einsatzblock (45), eine erste Feder (43) und einen Knopf (41) aufweist, wobei der Wasserkanal (46) an einem Ende mit der Wasserablasstülle (40), und an dem anderen Ende mit dem Wasserauslassloch (52) durchgehend verbunden ist, wobei die Rohrwand des Wasserkanals (46) mit einer Ausnehmung ausgebildet ist, durch welche hin ein Ende des Einsatzblocks (45) in den Wasserkanal (46) einrastet und das andere Ende des Einsatzblocks (45) aus der Rohrwand des Wasserkanals (46) herausragt, so dass der Einsatzblock (45) an dem Knopf (41) angeschlossen ist, wobei die erste Feder (43) zwischen dem Knopf (41) und dem Wasserkanal (46) eingesetzt ist.

3. Tragbarer Haustier-Wasserspender nach Anspruch 2, **dadurch gekennzeichnet, dass** ein Ende des Einsatzblocks (45) L-förmig ausgebildet ist, während das andere Ende zur Rohrwand des Wasserkanals (46) parallel ausgelegt ist.

4. Tragbarer Haustier-Wasserspender nach Anspruch 1, **dadurch gekennzeichnet, dass** die Trennwand (50) ferner mit einem Lufteinlassloch (51) ausgebildet ist, während die obere Abdeckung (30) mit einem Wassersperrelement versehen ist, welches einen Schieber (62) mit einer Lochsperre (64) und eine zweite Feder (63) aufweist, wobei die Lochsperre (64) in die Richtung des Lufteinlasslochs (51) ausgelegt ist und die zweite Feder (63) an einer Außenwand der Lochsperre (64) eingesetzt ist.

5. Tragbarer Haustier-Wasserspender nach Anspruch 4, **dadurch gekennzeichnet, dass** die Oberseite des Schiebers (62) mit einer ersten Nut (65) und einer zweiten Nut (66) mit unterschiedlicher Tiefe versehen ist, wobei an der oberen Abdeckung (30) ein Sperrriegel (60) angebracht ist, dessen überstehendes Ende (61) zu dem Schieber (62) senkrecht bleibt und in der ersten Nut (65) oder der zweiten Nut (66) eingeschnallt werden kann.

6. Tragbarer Haustier-Wasserspender nach Anspruch 1, **dadurch gekennzeichnet, dass** in dem Becherkörper (10) eine Filterschale (70) installiert ist, welche mit einem Filter- und Klärelement versehen ist.

7. Tragbarer Haustier-Wasserspender nach Anspruch 6, **dadurch gekennzeichnet, dass** das Filter- und Klärelement als ein Aktivkohlesack (71) ausgebildet ist.

8. Tragbarer Haustier-Wasserspender nach Anspruch 4, **dadurch gekennzeichnet, dass** die Klappe (20) mit einem Hohlraum zum Wasserablassen ausgebildet ist, mit welchem die Wasserablasstülle (40) durchgehend verbunden ist.

## Revendications

1. Un distributeur d'eau portable pour animaux de compagnie, comprenant un corps de gobelet (10), le distributeur d'eau portable pour animaux de compagnie est **caractérisé en ce que** le distributeur d'eau portable pour animaux de compagnie comprend en outre un couvercle coulissant (20), le couvercle coulissant (20) est emmanché sur la paroi extérieure du corps de gobelet (10) et peut coulisser le long de la paroi extérieure du corps de gobelet (10) pour être utilisé comme un bol destiné à boire pour animaux de compagnie, le corps de gobelet (10 ) est pourvu d'un couvercle supérieur (30), le couvercle supérieur (30) est muni d'une buse de sortie d'eau (40), une plaque de séparation (50) est disposée entre le couvercle supérieur (30) et le corps de gobelet (10), la plaque de séparation (50) est pourvue d'un trou de sortie d'eau (52), un dispositif de commande de débit d'eau est disposé dans le couvercle supérieur (30), dans lequel ledit dispositif de commande de débit d'eau est un dispositif de commutateur de débit d'eau de type de presse reliant le trou de sortie d'eau (52) et la buse de sortie d'eau (40).

2. Le distributeur d'eau portable pour animaux de compagnie selon la revendication 1, dans lequel le dispositif de commutateur de débit d'eau de type de presse comprend un tuyau de guidage d'eau (46), un bloc d'insertion (45), un premier ressort (43) et un bouton (41), une extrémité du tuyau de guidage d'eau (46) est reliée à la buse de sortie d'eau (40), l'autre extrémité de celui-ci est reliée au trou de sortie d'eau (52), la paroi de tuyau du tuyau de guidage d'eau (46) est pourvue d'un corps de rainure, une extrémité du bloc d'insertion (45) est insérée dans le tuyau de guidage d'eau (46) depuis le corps de rainure, l'autre extrémité du bloc d'insertion (45) s'étend hors de la paroi de tuyau du tuyau de guidage d'eau(46) et est reliée au bouton(41), et le premier ressort(43) est disposé entre le bouton(41) et le tuyau de guidage d'eau(46).

3. Le distributeur d'eau portable pour animaux de compagnie selon la revendication 2, dans lequel l'extrémité du bloc d'insertion (45) est en forme de L, et l'extrémité du bloc d'insertion (45) est disposée en parallèle avec la paroi de tuyau du tuyau de guidage d'eau (46).

4. Le distributeur d'eau portable pour animaux de compagnie selon la revendication 1, dans lequel la plaque de séparation (50) est pourvue d'un trou d'entrée d'air (51), le couvercle supérieur (30) est en outre muni d'un dispositif de blocage de l'eau, le dispositif de blocage de l'eau comprend un curseur(62), un élément de blocage de trou (64) et un second ressort (63), le curseur (62) est pourvu d'un élément de blocage de trou (64), l'élément de blocage de trou (64) est disposé vers le trou d'entrée d'air(51), et la paroi extérieure de l'élément de blocage de trou (64) est gainée du second ressort(63).

5. Le distributeur d'eau portable pour animaux de compagnie selon la revendication 4, dans lequel le haut du curseur (62) est pourvu d'une première rainure (65) et d'une seconde rainure (66) avec différentes profondeurs, un commutateur de verrouillage d'eau (60) est disposé sur le couvercle supérieur (30), le commutateur de verrouillage d'eau (60) est pourvu d'une extrémité saillante (61), et l'extrémité saillante (61) est disposée perpendiculairement au curseur (62) et bouclé dans la première rainure (65) ou la seconde rainure (66).

6. Le distributeur d'eau portable pour animaux de compagnie selon la revendication 1, dans lequel un plateau de filtre (70) est prévu dans le corps de gobelet (10), et un dispositif de purification de filtre est disposé dans le plateau de filtre.

7. Le distributeur d'eau portable pour animaux de compagnie selon la revendication 6, dans lequel le dispositif de purification du filtre comprend un sac de charbon (71).

8. Le distributeur d'eau portable pour animaux de compagnie selon la revendication 4, dans lequel le couvercle coulissant (20) est pourvu d'une cavité d'abreuvement, et la buse de sortie d'eau (40) est connecté avec la cavité d'abreuvement.
